# FASCICULE DE BREVET EUROPEEN

(11) **EP 3 651 057 B1**
(45) Date de publication et mention de la délivrance du brevet: **14.06.2023**
(21) Numéro de dépôt: 18205295.1
(22) Date de dépôt: 09.11.2018
(51) Int. Cl.: G06F 18/00, G06V 40/16, G06V 40/40

(54) **PROCEDE D'AUTHENTIFICATION FACIALE D'UN PORTEUR D'UNE MONTRE**
GESICHTSERKENNUNGSVERFAHREN EINES ARMBANDUHRTRÄGERS
PROCEDURE FOR FACIAL AUTHENTICATION OF A WEARER OF A WATCH

(43) Date de publication de la demande: 13.05.2020
(73) Titulaire: Tissot S.A., 2400 Le Locle (CH)
(72) Inventeur: FRANZI, Edoardo, 1400 Cheseaux-Noréaz (CH); PORRET, Alain-Serge, 2000 Neuchâtel (CH)
(74) Mandataire: ICB SA

(56) Documents cités:
- US-A1- 2013 101 182
- US-A1- 2013 286 161
- US-A1- 2016 285 865
- Laurindo De Sousa Britto Neto ET AL: "A Wearable Face Recognition System Built into a Smartwatch and the Blind and Low Vision Users" In: "Lecture Notes in Business Information Processing", 1 janvier 2015 (2015-01-01), Springer Berlin Heidelberg, DE, XP55580229, ISSN: 1865-1348 vol. 241, pages 515-528, DOI: 10.1007/978-3-319-29133-8_25, * le document en entier *

## Description

### Domaine technique

La présente invention concerne un procédé d'authentification faciale d'un porteur d'une montre.

L'invention concerne également une montre mettant en oeuvre ce procédé ainsi qu'un programme d'ordinateur.

### Art antérieur

Une montre comprend un ensemble de fonctions qui peut être utilisé par le porteur. De telles fonctions peuvent concerner en plus du réglage de l'heure ou de la date, une utilisation de données confidentielles ou privées propres au porteur et utiles pour accéder à des services personnalisés. Ces données sont par exemple des clés, certificats, codes d'authentification, mots de passe et codes personnels qui permettent de réaliser une connexion sécurisée de la montre à un réseau privé d'une entreprise, une authentification auprès de serveurs sécurisés comme un serveur bancaire, ou une messagerie sécurisée pour l'envoi et la réception de courriels signés et/ou chiffrés. Dès lors, on comprend alors qu'il est important de pouvoir sécuriser l'accès à l'utilisation de telles fonctions de la montre.

Pour ce faire, on connait dans l'état de la technique des procédés d'authentification prévoyant de sécuriser l'accès à l'utilisation de ces fonctions de la montre par la saisie d'un code secret de type code PIN.

De tels procédés d'authentification ne sont toutefois pas entièrement satisfaisants car l'introduction d'un code secret par le porteur de la montre peut être observée relativement aisément par des tiers. Ce mécanisme nécessite par ailleurs la mémorisation par le porteur du code secret, ce qui peut s'avérer rébarbatif.

On comprend qu'il existe alors un besoin de trouver une solution alternative, notamment qui ne présente pas les inconvénients de l'art antérieur. Un exemple d'un document qui divulgue une montre intelligente est US2016285865.

### Résumé de l'invention

Un but de la présente invention est par conséquent de proposer un procédé d'authentification faciale d'un porteur d'une montre proposant une authentification forte et robuste du porteur qui est de plus d'une mise en oeuvre simple.

Dans ce dessein, l'invention porte sur un procédé d'authentification faciale d'un porteur d'une montre comprenant les étapes suivant :
- initiation du processus d'authentification comprenant une sous-étape de détection d'au moins un mouvement/geste déclencheur effectué par le porteur ;
- capture d'au moins une séquence d'images relative au visage du porteur pivotant d'une direction à une autre devant le capteur optique ;
- acquisition de données géométriques de surface du visage associées à chaque image de ladite au moins une séquence ;
- génération d'un modèle tridimensionnel du visage du porteur à partir de ladite au moins une séquence d'images capturée et desdites données géométriques acquises ;
- détermination d'un indice d'identification généré à partir de données d'identification relatives à une pluralité de traits caractéristiques du visage du porteur de la montre détectées à partir du modèle tridimensionnel, et
- identification du porteur si l'indice d'identification est supérieur à un indice d'identification de référence,
- l'étape d'initiation comporte une sous-étape de détermination que le visage du porteur positionné en regard du capteur optique appartient à un être vivant, lors q'une telle sous-étape différentes opérations de traitement sont réalisées sur au moins une donnée de mesure physiologique effectuée sur le visage positionné en regard dudit capteur optique visant à comparer ladite au moins une donnée de mesure à un ou plusieurs seuils de référence.
- Dans d'autres modes de réalisation, l'étape de capture comprend une sous-étape d'acquisition d'une pluralité d'images de toutes les parties constitutives du visage du porteur à mesure que ce visage pivote d'une direction à une autre devant le capteur optique ;
- la sous-étape d'acquisition comprend une phase de capture d'au moins deux images pour chaque partie identique du visage respectivement sous deux expositions lumineuses différentes : une exposition à la lumière visible et une exposition à la lumière infrarouge ;
- la sous-étape d'acquisition comprend une phase de guidage visuel et/ou sonore du porteur de la montre visant à maintenir :
   ▪ la montre dans une position stable ou sensiblement stable ;
   ▪ le visage du porteur dans une position optimale relativement au capteur optique afin qu'il soit compris dans chaque image de ladite au moins une séquence d'images ;
- l'étape d'acquisition est réalisée de manière simultanée ou sensiblement simultanée à l'étape de capture ;
- l'étape de détermination comprend une sous-étape de traitement durant laquelle les données d'identification issues du modèle tridimensionnel sont comparées avec des données d'identification préenregistrées relatives à un modèle tridimensionnel de référence afin de déterminer une correspondance entre ces données d'identification ;
- ledit au moins un mouvement/geste déclencheur est réalisé par une partie du corps du porteur comprenant la montre lors d'un positionnement de son visage en regard du capteur optique de cette montre.

L'invention porte aussi sur une montre notamment connectée, mettant en oeuvre ce procédé, comprenant une unité de traitement, un capteur optique, au moins une source lumineuse et des capteurs comportementaux et/ou physiologiques, ladite unité de traitement étant connectée au capteur optique, à ladite au moins une source lumineuse et aux capteurs comportementaux et/ou physiologiques.

L'invention porte également sur un programme d'ordinateur comprenant des instructions de code de programme pour l'exécution des étapes de ce procédé lorsque ledit programme d'ordinateur est exécuté par une unité de traitement d'une montre.

### Brève description des figures

D'autres particularités et avantages ressortiront clairement de la description qui en est faite ci-après, à titre indicatif et nullement limitatif, en référence aux figures annexées, dans lesquelles :
- la figure 1 représente un logigramme portant sur un procédé d'authentification faciale d'un porteur d'une montre, selon un mode de réalisation de l'invention, et
- la figure 2 représente une montre mettant en oeuvre ce procédé, selon le mode de réalisation de l'invention.

### Description détaillée de l'invention

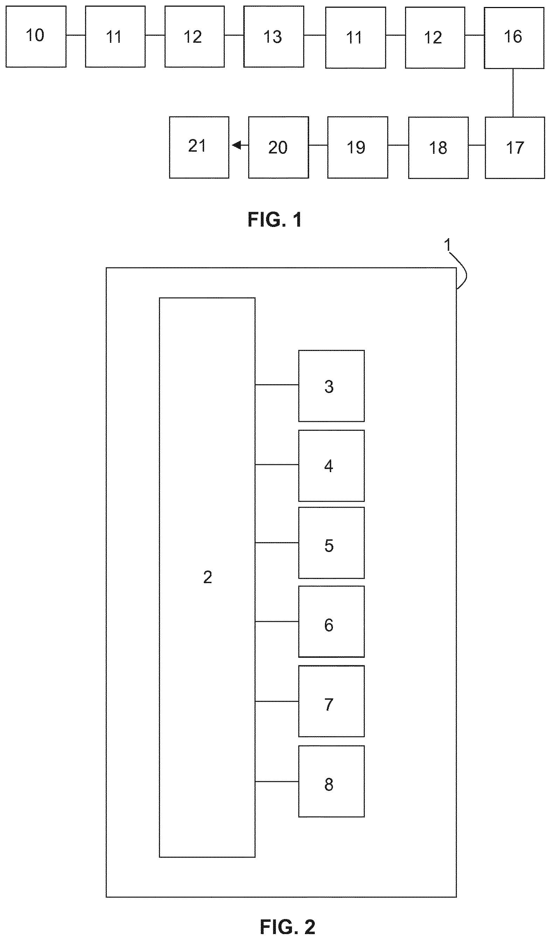

Sur la figure 1 est illustré un procédé d'authentification faciale d'un porteur d'une montre 1. Ce procédé vise à réaliser une authentification certaine du porteur de la montre 1 à partir d'une modélisation/représentation tridimensionnelle de son visage réalisée notamment à partir d'un capteur optique 3.

Un tel procédé est mis en oeuvre par une montre 1 notamment une montre connectée. Une telle montre 1 illustre sur la figure 2, comprend de manière non exhaustive et non limitative :
- une unité de traitement 2 ;
- un capteur optique 3 ;
- un cadran d'affichage 4 hybride pourvu d'une première composante d'affichage analogique et d'une deuxième composante d'affichage numérique et/ou alphanumérique ;
- une première source lumineuse 5 de type diode électroluminescente ou diode laser ;
- une deuxième source lumineuse 6 de type infrarouge ;
- une troisième source lumineuse 7 prévue pour être utilisée comme flash photographique ;
- une interface sonore telle qu'un haut-parleur ;
- un module de communication ;
- un mouvement mécanique ou électronique, et
- des capteurs 8 comportementaux et/ou physiologiques.

Cette unité de traitement 2 de la montre 1 comporte des ressources matérielles et logicielles en particulier au moins un processeur coopérant avec des éléments de mémoire. Ces éléments de mémoire comprennent un modèle tridimensionnel de référence relatif au visage du porteur, des données d'information relatives à des traits caractéristiques du visage du porteur compris dans le modèle tridimensionnel de référence, et un indice d'identification de référence. Une telle unité de traitement 2 est reliée/connectée entre autres au capteur optique 3, au cadran d'affichage 4, aux première, deuxième et troisième sources lumineuse 5, 6, 7, à l'interface sonore, au module de communication, au mouvement et aux capteurs 8 environnementaux, comportementaux et/ou physiologiques.

Dans cette montre 1, le capteur optique 3 appelé capteur d'images matriciels peut par exemple comprendre des capteurs de technologie CCD (technologie a transfert de charges) ou encore de technologie dite CMOS. Un tel capteur comprend une matrice de points d'image (ou pixel) photosensibles. Cette matrice de points est également appelée ici « matrice de pixel » et comprend NxM pixels unitaires avec une excellente sensibilité à la lumière. Dans une variante, un tel capteur 3 peut comprendre un film organique sensible à lumière à la place des photosites traditionnels. Un tel capteur optique 3 comprend aussi un convertisseur analogique-numérique. On notera que ce capteur optique 3 est apte à mettre en oeuvre une fonction de mise au point automatique, une fonction de « zoom » aussi automatique ainsi qu'une fonction de capture d'images infrarouges. De plus ce capteur optique 3 peut fonctionner sur le principe du temps de vol (TOF ou « Time of Flight » en anglais) afin de mesurer en temps réel une scène en trois dimensions comme le visage du porteur, dans ce cas le capteur optique 3 peut comprendre un filtre à bande passante dans l'infrarouge pour éliminer la lumière ambiante superflue.

Par ailleurs, les capteurs 8 comportementaux sont aptes à mesurer tous types de caractéristiques comportementales du porteur de la montre 1 comme par exemple les mouvements ou les gestes réalisés par ce dernier. Pour ce faire, ces capteurs 8 comportementaux peuvent comprendre un ou plusieurs capteurs inertiels de type accéléromètre, gyroscope ou gyromètre multiaxes miniature tels que des capteurs multiaxes fabriqués en technologie MEMS, capables de détecter des vitesses angulaires et des accélérations linéaires selon plusieurs axes associant accéléromètres et/ou gyroscopes. Concernant les capteurs 8 physiologiques, ils sont aptes à mesurer les paramètres relatifs au fonctionnement d'un organisme du porteur tels que, par exemple, le pouls, la saturation du sang en oxygène, l'impédance de la peau, la tension artérielle, le rythme respiratoire, l'arythmie respiratoire, la température cutanée, le taux de sudation, la radiation infrarouge du corps, la saturation du sang en oxygène ou le débit sanguin. On notera que la montre 1 peut aussi comprendre des capteurs environnementaux spécifiquement adaptés pour mesurer des paramètres environnementaux comme par exemple la température, la pression atmosphérique, etc...

Un tel procédé comprend une étape d'initiation 10 du processus d'authentification comprenant une sous-étape de détection 11 d'au moins un mouvement/geste déclencheur effectué par le porteur. Ce dit au moins un mouvement/geste déclencheur est réalisé par une partie du corps du porteur comprenant la montre 1 et ce, lors d'un positionnement de son visage en regard du capteur optique 3 de cette montre 1. Une telle étape 10 vise à initier le processus d'authentification sous certaines conditions qui sont vérifiées par la mise en oeuvre des sous-étapes de détection et de détermination 11, 12 de cette étape 10 explicitées par la suite.

La sous-étape de détection 11 permet de pré-identifier le porteur de la montre 1 en s'assurant qu'il est bien à l'origine du processus d'authentification qui va être initiée. Pour ce faire, lorsque le porteur désire s'authentifier, il exécute alors au moins un mouvement/geste prédéfini, par exemple, de son bras et/ou de son poignée pourvu de la montre 1. Ce dit au moins un mouvement/geste est alors identifié par l'unité de traitement 2 après la réalisation de différentes opérations de traitement effectuées par cette dernière, sur au moins une donnée de mesure provenant du capteur comportemental 7 ayant capturé ce dit au moins un mouvement/geste exécuté par le porteur. On notera que ces opérations consistent notamment à comparer ladite au moins une donnée de mesure à un ou plusieurs seuils de référence.

Ainsi que nous l'avons précédemment évoqué, cette étape 10 comprend aussi la sous-étape de détermination 12 que le visage du porteur positionné en regard du capteur optique 3 appartient à un être vivant. Une telle sous-étape 12 vise à vérifier que le visage positionné en regard du capteur est effectivement celui du porteur de la montre qui souhaite s'authentifier et non une reproduction de son visage qui peut être comprise par exemple dans une photographie, une vidéo ou encore une sculpture. Lors d'une telle sous-étape 12, l'unité de traitement 2 réalise différentes opérations de traitement sur au moins une donnée de mesure physiologique effectuée sur le visage positionné en regard du capteur optique 3 visant à comparer ladite au moins une donnée de mesure à un ou plusieurs seuils de référence. Cette mesure peut être établie à partir de l'émission de radiation infrarouge provenant de ce visage, d'une variation de la taille de la pupille d'au moins un oeil de ce visage après une exposition à la troisième source lumineuse 6 agissant comme un flash photographique, une détection d'un clignement de paupière, etc...

On notera qu'une telle sous-étape de détermination 12 peut être mise en oeuvre de manière simultanée ou sensiblement simultanée à la sous-étape de détection 11.

Une fois l'étape d'initiation 10 réalisée, le procédé prévoit alors la réalisation d'une étape de capture 13 d'au moins une séquence d'images relative au visage du porteur pivotant d'une direction à une autre devant le capteur optique 3. Plus précisément, cette étape 13 comprend une sous-étape d'acquisition 14 d'une pluralité d'images de toutes les parties constitutives du visage du porteur à mesure que ce visage pivote d'une direction à une autre devant le capteur optique 3. On comprend ici que le pivotement du visage du porteur devant le capteur optique 3 est réalisé de manière à ce que toutes les parties constitutives du visage soient capturées. Cette sous-étape 14 comprend une phase de capture 15 d'au moins deux images pour chaque partie identique du visage respectivement sous deux expositions lumineuses différentes : une exposition à la lumière visible et une exposition à la lumière infrarouge.

Dans ces conditions, cette sous-étape 14 permet d'obtenir au moins deux séquences d'images du visage du porteur, une première séquence d'images de ce visage dont la surface est éclairée par la lumière visible et une deuxième séquence d'images du visage dont la surface est éclairée par la lumière infrarouge.

On notera que l'utilisation d'images comprenant le visage exposé à la lumière visible permet de faciliter la détection de traits caractéristiques du visage relatifs à la couleur ou la texture de la peau du visage dans ces images. L'utilisation d'images comprenant le visage exposé à la lumière infrarouge est avantageuse car elle est moins dépendante des conditions d'éclairement que l'utilisation d'images du visage capturées en lumière visible.

Une telle sous-étape 14 comprend aussi une phase de guidage 16 visuel et/ou sonore du porteur de la montre 1 visant à maintenir :
- la montre 1 dans une position stable ou sensiblement stable, et/ou
- le visage du porteur dans une position optimale relativement au capteur optique 3 afin qu'il soit compris dans chaque image de ladite au moins une séquence d'images.

On notera que lors de cette sous-étape 14, l'unité de traitement 2 peut contrôler les fonctions de mise au point et de « zoom » du capteur optique 3 afin de contribuer au maintien du visage du porteur dans chaque image de chaque séquence d'images capturée.

Le procédé comprend ensuite une étape d'acquisition 17 de données géométriques de surface du visage associées à chaque image de ladite au moins une séquence durant la mise en oeuvre de l'étape de capture d'au moins une séquence d'images relative au visage du porteur. Durant cette étape 17, lorsque le visage du porteur pivote d'une direction à une autre devant le capteur optique 3, ces données géométriques sont générées pour chaque image acquise comprise dans les première et deuxième séquences. Plus précisément, durant le pivotement du visage du porteur, un faisceau de lumière structurée de type laser est alors projeté sur chaque partie du visage capturée présente dans chaque image des première et deuxième séquences de manière à scanner les formes tridimensionnelles de chacune de ces parties du visage.

Un telle étape d'acquisition 17 est réalisée de manière simultanée ou sensiblement simultanée à l'étape de capture 13. Les images des première et deuxième séquences sont ensuite archivées dans les éléments de mémoire de l'unité de traitement 2 avec les données géométriques correspondantes qui sont associées à chacune des images.

Par la suite, le procédé comprend une étape de génération 18 d'un modèle tridimensionnel du visage du porteur à partir de ladite au moins une séquence d'images capturée et des données géométriques acquises. Lors de cette étape 18, l'unité de traitement 2 met en oeuvre un algorithme de construction du modèle tridimensionnel du visage du porteur à partir de ladite au moins une séquence d'images et des données géométriques. Un tel algorithme peut comprendre une phase de prétraitement des images des première et deuxième séquences afin de corriger les imperfections qu'elles peuvent contenir telles que des pics, des trous ou encore la présence de parties indésirables comme les cheveux ou les habits, ou encore des accessoires présents sur le visage. Cette phase peut donc prévoir une correction des imperfections par l'élimination des pics, le bouchage des trous et la segmentation de la partie utile du visage. Pour ce faire un filtre médian bidimensionnel peut être appliqué à chaque image en entrée afin d'éliminer le bruit. Ce bruit peut se présenter sous forme de pixels incohérents avec leurs voisinages. Ensuite, cette phase peut prévoir l'application d'une interpolation bidimensionnelle pour boucher les trous résultant de l'absorption du laser ou de la lumière structurée par des régions sombres du visage comme l'iris, les sourcils ou tout simplement quand la bouche est ouverte. A partir des images obtenues pour chacune de ces séquences et des données géométriques correspondantes, le modèle tridimensionnel est généré notamment par la mise en oeuvre d'un processus de maillage tridimensionnel.

Le procédé comprend ensuite une étape de détermination 19 d'un indice d'identification généré à partir de données d'identification relatives à une pluralité de traits caractéristiques du visage du porteur de la montre 1 détectées à partir du modèle tridimensionnel généré. Ces traits caractéristiques du visage encore appelés points caractéristiques du visage, permettent d'analyser la structure du visage en trois dimensions. Autrement dit, ces traits caractéristiques permettent d'interpréter le visage comme un ensemble de traits caractéristiques dispatchés en hauteur, largeur et profondeur. De tels traits caractéristiques peuvent être de manière non limitative et non exhaustive relatifs :
- à la géométrie du visage ;
- à la géométrie de parties de la surface du visage ;
- des positions relatives de parties du visage ;
- à la texture de la peau ou de régions de cette peau du visage ;
- à la teinte/couleur de la peau ou de régions de cette peau du visage.

A titre d'exemple, ces traits caractéristiques peuvent être des rides, un menton, un grain de beauté, des cicatrices, des lèvres, des commissures des lèvres, un nez, le bout du nez, des oreilles, le bout des oreilles, l'écartement des yeux, l'écartement des arêtes du nez, l'écartement du menton, etc...

De préférence, de tels traits caractéristiques du visage pris en compte pour la détermination de l'indice d'identification sont compris dans des régions/zones du visage du porteur qui restent stables lors d'expressions du visage.

Lors de cette étape 19, une sous-étape de traitement 20 est mise en oeuvre durant laquelle les données d'identification issues du modèle tridimensionnel sont comparées avec des données d'identification préenregistrées dans les éléments de mémoire de l'unité 2 afin de déterminer une correspondance entre ces données d'identification. En fonction du résultat de cette comparaison, un indice d'identification est alors généré par l'unité de traitement 2. Cette sous-étape de traitement 20 peut prévoir une utilisation d'un nombre configurable limité de données d'identification pour sa mise oeuvre. Un tel nombre peut être paramétré selon la robustesse que l'on souhaite apporter à ce procédé relativement à la rapidité de réalisation d'un tel procédé d'authentification.

Ensuite, le procédé comprend une étape identification 21 du porteur si l'indice d'identification est supérieur à un indice d'identification de référence. Cet indice de référence permet de vérifier la correspondance entre les données d'identification du modèle tridimensionnel du visage du porteur construit lors de l'étape de génération 18 et les données d'identification préenregistrées dans les éléments de mémoire de l'unité de traitement 2 et qui sont relatives au modèle tridimensionnel de référence du visage du porteur. Autrement dit, lorsque l'indice d'identification déterminé est supérieur à l'indice d'identification de référence, le modèle tridimensionnel généré présente un nombre important de similarités avec le modèle tridimensionnel de référence du visage du porteur. A l'inverse, lorsque l'indice d'identification déterminé est inférieur ou égal à l'indice d'identification de référence, le nombre de similarités entre le modèle tridimensionnel généré et le modèle tridimensionnel de référence est insuffisant et par conséquent le porteur n'est pas identifié. Dans ce cas, un message visuel et/ou sonore peut être diffusé au porteur lui signifiant qu'il n'est donc pas identifié.

L'invention concerne aussi un programme d'ordinateur comprenant des instructions de code de programme pour l'exécution des étapes 10 à 21 de ce procédé lorsque ledit programme d'ordinateur est exécuté par une unité de traitement 2 de la montre 1.

## Revendications

1. Procédé d'authentification faciale d'un porteur d'une montre (1) comprenant les étapes suivant :
- initiation (10) du processus d'authentification comprenant une sous-étape de détection (11) d'au moins un mouvement/geste déclencheur effectué par le porteur ;
- capture (13) d'au moins une séquence d'images relative au visage du porteur pivotant d'une direction à une autre devant le capteur optique (3) ;
- acquisition (17) de données géométriques de surface du visage associées à chaque image de ladite au moins une séquence ;
- génération (18) d'un modèle tridimensionnel du visage du porteur à partir de ladite au moins une séquence d'images capturée et desdites données géométriques acquises ;
- détermination (19) d'un indice d'identification généré à partir de données d'identification relatives à une pluralité de traits caractéristiques du visage du porteur de la montre (1) détectées à partir du modèle tridimensionnel, et
- identification (21) du porteur si l'indice d'identification est supérieur à un indice d'identification de référence, et
en ce que l'étape d'initiation (10) comporte une sous-étape de détermination (12) que le visage du porteur positionné en regard du capteur optique (3) appartient à un être vivant, **caractérisé en ce que** lors d'une telle sous-étape (12) différentes opérations de traitement sont réalisées sur au moins une donnée de mesure physiologique effectuée sur le visage positionné en regard dudit capteur optique (3) visant à comparer ladite au moins une donnée de mesure à un ou plusieurs seuils de référence.

2. Procédé selon la revendication précédente, **caractérisé en ce que** l'étape de capture (13) comprend une sous-étape d'acquisition (14) d'une pluralité d'images de toutes les parties constitutives du visage du porteur à mesure que ce visage pivote d'une direction à une autre devant le capteur optique (3).

3. Procédé selon la revendication précédente, **caractérisé en ce que** la sous-étape d'acquisition (14) comprend une phase de capture (15) d'au moins deux images pour chaque partie identique du visage respectivement sous deux expositions lumineuses différentes : une exposition à la lumière visible et une exposition à la lumière infrarouge.

4. Procédé selon les revendications 2 ou 3, **caractérisé en ce que** la sous-étape d'acquisition (14) comprend une phase de guidage (16) visuel et/ou sonore du porteur de la montre (1) visant à maintenir :
- la montre (1) dans une position stable ou sensiblement stable, et/ou
- le visage du porteur dans une position optimale relativement au capteur optique (3) afin qu'il soit compris dans chaque image de ladite au moins une séquence d'images.

5. Procédé selon l'une quelconque des revendications précédentes, **caractérisé en ce que** l'étape d'acquisition (17) est réalisée de manière simultanée ou sensiblement simultanée à l'étape de capture (13).

6. Procédé selon l'une quelconque des revendications précédentes, **caractérisé en ce que** l'étape de détermination (19) comprend une sous-étape de traitement (20) durant laquelle les données d'identification issues du modèle tridimensionnel sont comparées avec des données d'identification préenregistrées relatives à un modèle tridimensionnel de référence afin de déterminer une correspondance entre ces données d'identification.

7. Procédé selon l'une quelconque des revendications précédentes, **caractérisé en ce que** ledit au moins un mouvement/geste déclencheur est réalisé par une partie du corps du porteur comprenant la montre (1) lors d'un positionnement de son visage en regard du capteur optique (3) de cette montre (1).

8. Montre (1) notamment connectée, mettant en oeuvre le procédé selon l'une quelconque des revendications précédentes comprenant une unité de traitement (2), un capteur optique (3), au moins une source lumineuse (5, 6, 7) et des capteurs (8) comportementaux et/ou physiologiques, ladite unité de traitement (2) étant connectée au capteur optique (3), à ladite au moins une source lumineuse (5, 6, 7) et aux capteurs (8) comportementaux et/ou physiologiques.

9. Programme d'ordinateur comprenant des instructions de code de programme pour l'exécution des étapes (10 à 21) du procédé selon l'une quelconque des revendications 1 à 7 lorsque ledit programme d'ordinateur est exécuté par une unité de traitement (2) d'une montre (1).

## Patentansprüche

1. Verfahren zur Gesichtserkennung eines Trägers einer Uhr (1), die folgenden Schritte umfassend:
- Einleiten (10) des Erkennungsprozesses, umfassend einen Teilschritt zur Erkennung (11) mindestens einer Auslösebewegung/-geste, die von dem Träger ausgeführt wird;
- Aufnehmen (13) mindestens einer Bildsequenz in Bezug auf das Gesicht des Trägers, der sich vor dem optischen Sensor (3) von einer Richtung in eine andere dreht;
- Erfassen (17) von geometrischen Oberflächendaten des Gesichts, die einem jeden Bild der mindestens einen Sequenz zugeordnet sind;
- Generieren (18) eines dreidimensionalen Modells des Gesichts des Trägers ausgehend von der mindestens einen aufgenommenen Bildsequenz und den erfassten geometrischen Daten;
- Bestimmen (19) eines Identifizierungsindex, der ausgehend von Identifizierungsdaten in Bezug auf eine Vielzahl von charakteristischen Gesichtszügen des Trägers der Uhr (1) generiert wird, die ausgehend von dem dreidimensionalen Modell detektiert werden, und
- Identifizieren (21) des Trägers, wenn der Identifizierungsindex größer als ein Bezugsidentifizierungsindex ist, und
dadurch, dass der Schritt des Einleitens (10) einen Teilschritt zum Bestimmen (12) beinhaltet, dass das Gesicht des Trägers, das gegenüber dem optischen Sensor (3) positioniert ist, einem Lebewesen angehört, **dadurch gekennzeichnet, dass** bei einem solchen Teilschritt (12) unterschiedliche Bearbeitungsvorgänge an mindestens einem Datum einer physiologischen Messung realisiert werden, die am Gesicht durchgeführt wird, das gegenüber dem optischen Sensor (3) positioniert, ist, darauf abzielend, das mindestens eine Messdatum mit einer oder mehreren Messschwellen zu vergleichen.

2. Verfahren nach dem vorstehenden Anspruch, **dadurch gekennzeichnet, dass** der Schritt des Aufnehmens (13) einen Teilschritt zur Erfassung (14) einer Vielzahl von Bildern aller grundlegenden Teile des Gesichts des Trägers in dem Maße umfasst, dass sich dieses Gesicht vor dem optischen Sensor (3) von einer Richtung in eine andere dreht.

3. Verfahren nach dem vorstehenden Anspruch, **dadurch gekennzeichnet, dass** der Teilschritt zur Erfassung (14) eine Aufnahmephase (15) mindestens zweier Bilder für jeden identischen Teil des Gesichts jeweils unter zwei unterschiedlichen Belichtungen umfasst: Einer Belichtung mit sichtbarem Licht und einer Belichtung mit Infrarot-Licht.

4. Verfahren nach den Ansprüchen 2 oder 3, **dadurch gekennzeichnet, dass** der Teilschritt zur Erfassung (14) eine sichtbare und/oder hörbare Leitphase (16) des Trägers der Uhr (1) umfasst, die darauf abzielt, Folgendes festzuhalten:
- die Uhr (1) in einer stabilen oder im Wesentlichen stabilen Position, und/oder
- das Gesicht des Trägers in einer optimalen Position in Bezug auf den optischen Sensor (3), damit es in jedem Bild der mindestens einen Bildsequenz enthalten ist.

5. Verfahren nach einem der vorstehenden Ansprüche, **dadurch gekennzeichnet, dass** der Schritt des Erfassens (17) gleichzeitig oder im Wesentlichen gleichzeitig mit dem Schritt des Aufnehmens (13) realisiert wird.

6. Verfahren nach einem der vorstehenden Ansprüche, **dadurch gekennzeichnet, dass** der Schritt des Bestimmens (19) einen Teilschritt zum Bearbeiten (20) umfasst, bei dem die aus einem dreidimensionalen Modell stammenden Identifizierungsdaten mit den zuvor gespeicherten Identifizierungsdaten in Bezug auf ein dreidimensionales Bezugsmodell verglichen werden, um eine Entsprechung zwischen diesen Identifizierungsdaten zu bestimmen.

7. Verfahren nach einem der vorstehenden Ansprüche, **dadurch gekennzeichnet, dass** die mindestens eine Auslösebewegung/-geste von einem Teil des Körpers des Trägers, der die Uhr (1) umfasst, bei einer Positionierung seines Gesichts gegenüber dem optischen Sensor (3) dieser Uhr (1) realisiert wird.

8. Uhr (1), insbesondere angeschlossen, die das Verfahren nach einem der vorstehenden Ansprüche umsetzt, umfassend eine Bearbeitungseinheit (2), einen optischen Sensor (3), mindestens eine Lichtquelle (5, 6, 7) und Verhaltens- und/oder physiologische Sensoren (8), wobei die Bearbeitungseinheit (2) an den optischen Sensor (3), an die mindestens eine Lichtquelle (5, 6, 7) und an die Verhaltens- und/oder physiologische Sensoren (8) angeschlossen ist.

9. Computerprogramm, umfassend Programmcodeanweisungen zur Ausführung der Schritte (10 bis 21) des Verfahrens nach einem der Ansprüche 1 bis 7, wenn das Computerprogramm durch eine Bearbeitungseinheit (2) einer Uhr (1) ausgeführt wird.

## Claims

1. Method for facial authentication of a wearer of a watch (1) comprising the following steps:
- initiation (10) of the authentication process comprising a substep of detection (11) of at least one triggering movement/gesture carried out by the wearer;
- capture (13) of at least one sequence of images relative to the face of the wearer pivoting from one direction to another in front of the optical sensor (3);
- acquisition (17) of surface geometric data of the face associated with each image of said at least one sequence;
- generation (18) of a three-dimensional model of the face of the wearer from said at least one captured sequence of images and from said acquired geometric data;
- determination (19) of an identification index generated on the basis of identification data relative to a plurality of features characteristic of the face of the wearer of the watch (1) detected on the basis of the three-dimensional model, and
- identification (21) of the wearer if the identification index is greater than a reference identification index, and
in that the step of initiation (10) comprises a substep of determining (12) that the face of the wearer positioned opposite the optical sensor (3) belongs to a living being, **characterised in that** during such a substep (12) different processing operations are carried out on at least one physiological measurement datum taken on the face positioned opposite said optical sensor (3) aiming to compare said at least one measurement datum with one or more reference thresholds.

2. Method according to the preceding claim, **characterised in that** the step of capture (13) comprises a substep of acquisition (14) of a plurality of images of all the portions forming the face of the wearer as this face pivots from one direction to another in front of the optical sensor (3).

3. Method according to the preceding claim, **characterised in that** the substep of acquisition (14) comprises a phase of capture (15) of at least two images for each identical portion of the face respectively with two different light exposures: one exposure to visible light and one exposure to infrared light.

4. Method according to any one of claims 2 or 3, **characterised in that** the substep of acquisition (14) comprises a phase of visual and/or sound guiding (16) of the wearer of the watch (1) aiming to maintain:
- the watch (1) in a stable or substantially stable position, and/or
- the face of the wearer in an optimal position relative to the optical sensor (3) in order for it to be comprised in each image of said at least one sequence of images.

5. Method according to any one of the preceding claims, **characterised in that** the step of acquisition (17) is carried out simultaneously or substantially simultaneously to the step of capture (13).

6. Method according to any one of the preceding claims, **characterised in that** the step of determination (19) comprises a substep of processing (20) during which the identification data coming from the three-dimensional model is compared to pre-recorded identification data relative to a reference three-dimensional model in order to determine a correspondence between this identification data.

7. Method according to any one of the preceding claims, **characterised in that** said at least one triggering movement/gesture is carried out by a portion of the body of the wearer comprising the watch (1) during a positioning of his face opposite the optical sensor (3) of this watch (1).

8. Watch (1) in particular smart, implementing the method according to any one of the preceding claims, comprising a processing unit (2), an optical sensor (3), at least one light source (5, 6, 7) and behavioural and/or physiological sensors (8), said processing unit (2) being connected to the optical sensor (3), to said at least one light source (5, 6, 7) and to the behavioural and/or physiological sensors (8).

9. Computer program comprising program code instructions for the execution of the steps (10 to 21) of the method according to any one of claims 1 to 7 when said computer program is executed by a processing unit (2) of a watch (1).
